# EUROPEAN PATENT APPLICATION

(11) **EP 4 166 385 A1**
(43) Date of publication of application: **19.04.2023**
(21) Application number: 21202720.5
(22) Date of filing: 14.10.2021
(51) Int. Cl.: B60L 58/26, B60L 1/00, B60L 3/12, B60L 1/08

(54) **COMPONENT NODE**

(71) Applicant: MAHLE International GmbH, 70376 Stuttgart (DE)
(72) Inventor: BIELESCH, Thomas, 75417 Mühlacker (DE); Blazic, Vojko, 5293 Volcja Draga (SI); Heidenreich, Gert, 71384 Weinstadt (DE); HOFMANN, Herbert, 70806 Kornwestheim (DE); ULRICH, Holger, 70825 Korntal-Münchingen (DE)
(74) Representative: BRP Renaud & Partner mbB Rechtsanwälte Patentanwälte Steuerberater

(57) **Abstract**

The invention relates to a component node (1) for a vehicle. The component node (1) contains at least one functional component (2) and a component carrier (7). A component interface is formed on the component carrier (7) and the functional component (2) is detachably attached to the component carrier (7) via the component interface.

According to the invention, the component node (1) contains a control circuit (4) with at least one control unit (5) and at least one control component (3), connected into the control circuit (4), for the at least one functional component (2).

## Description

The invention relates to a component node for a vehicle with an electric drive motor and an electric energy storage device according to the generic concept of claim 1.

A vehicle with an electric drive motor and an electric energy storage system can be a purely battery electric vehicle or a fuel cell vehicle or a hybrid vehicle. A liquid guiding circuit of the vehicle can contain several functional components through which cooling liquid such as coolant and/or refrigerant can flow. The challenge is to arrange the individual components in the vehicle in a space-saving manner.

US 10,665,908 B2 describes an expansion tank to which the functional components can be attached. The disadvantage of such an expansion tank is that it is a highly complex component that is susceptible to failure.

Another challenge is the interconnection of the individual functional components with the on-board electronics. The complex mechatronic functional components usually contain control units and/or communication interfaces for communicating with the on-board electronics of the vehicle. The analog functional components, on the other hand, often contain no interfaces and their signals also contain to be pre-processed. Interconnecting of the functional components with the on-board electronics therefore involves a great deal of effort.

It is therefore the object of the invention to provide an improved or at least alternative embodiment for a component node of the generic type in which the described disadvantages are overcome.

This problem is solved according to the invention by the object of independent claim 1. Advantageous embodiments are the subject of the dependent claims.

The present invention is based on the general idea of centrally controlling or regulating functional components of a component node and arranging a corresponding control unit at the component node.

Component node is provided for a vehicle with an electric drive motor and an electric energy storage device. The vehicle can be a purely battery electric vehicle or a fuel cell vehicle or a hybrid vehicle. The component node contains at least one functional component through which cooling liquid can flow for at least one liquid guiding circuit of the vehicle and a component carrier. The at least one liquid guiding circuit can be a refrigerant circuit and/or a coolant circuit. A component interface is formed on the component carrier for the respective functional component, and the respective functional component is detachably attached to the component carrier via the component interface. According to the invention, the component node contains a control circuit with at least one control unit and at least one control component. The control component is thereby connected into the control circuit and is provided for the one functional component.

In the component node according to the invention, the control component connected in the circuit can be controlled by the control unit, thereby eliminating the need to connect the control component to an on-board electronics of the vehicle. As a result, the number of interfaces in the component node can be significantly reduced. In addition, the compact arrangement of the functional components and the control unit on the component node can achieve a high level of component integration, thereby providing a cost-optimized solution. Furthermore, the component node can ensure a demand-oriented distribution of cooling liquid in the at least one liquid guiding circuit. The control circuit in the component node also enables temperature management of the at least one liquid guiding circuit.

The at least one functional component can realize an essential or indispensable fluidic function in the at least one liquid guiding circuit, such as cooling or collecting or condensing the cooling liquid. The component carrier, on the other hand, may be designed exclusively to support the at least one functional component. Alternatively, the component carrier may be designed exclusively for supporting the at least one functional component and for connecting the at least one functional component to the at least one liquid guiding circuit of the vehicle via a fluid line formed in the component carrier.

The component node can contain several - but at least two - functional components and several - but at least two - control components connected to the control circuit. The individual functional components can be fluidically integrated into different liquid guiding circuits - for example into a refrigerant circuit and a coolant circuit. Furthermore, the at least two control components connected into the control circuit may be controllable interdependently of each other via the control unit. Furthermore, the at least two control components connected to the control circuit can be automatically addressable via a BUS system.

The at least one control component can be assigned to the at least one functional component and the at least one functional component can be controlled via the at least one control component. For example, the at least one functional component can be represented by a mechatronic component and the at least one control component can be represented by power electronics. Preferably, the mechatronic component may be an expansion valve or a pump or a motor or a compressor. The control component may then be provided for controlling the expansion valve or the pump or the motor or the compressor.

Alternatively, the at least one control component can be assigned to the at least one functional component and be designed for measuring of data on the at least one functional component. For example, the at least one control component can be represented by a sensor. The sensor can be a temperature sensor for detecting temperature at the at least one functional component or a filling level sensor for detecting filling level of the at least one functional component or a pressure sensor for detecting pressure in the at least one functional component. If the at least one control component is represented by a sensor, the control unit can be designed for AD conversion and signal adaptation of sensor signals received by the at least one sensor.

If the component node contains several - but at least two - functional components and several - but at least two - control components, the respective functional component may be assigned a single control component and/or the respective functional component may be assigned more than one control component and/or the several functional components may be assigned a common control component.

In one possible embodiment of the component node, it may be provided that all control components of the component node are connected into the control circuit of the component node. If the component node contains several - but at least two - control components, all control components are connected into the control circuit and the control unit can regulate or control all functional components associated with the control components. In this embodiment, the functional components of the component node can be connected to the outside in a signal-transmitting and power-transmitting manner via a single connector of the control unit.

In a further embodiment, it can be provided that the component node contains at least one further control component for the at least one functional component that is not connected into the control circuit. The control component of the at least one functional component may not be controlled by the control unit. The control component that is not connected to the control circuit can itself be connected to the outside in a signal-transmitting and power-transmitting manner and be controlled externally - for example via the on-board electronics of the vehicle.

In a further embodiment, it can be provided that the component node contains at least one further control component, not connected into the control circuit, for the at least one functional component. The control unit and the at least one further control component can be connected to the outside via a common connector in a signal-transmitting and/or power-transmitting manner. As soon as only the control component of a single functional component is not connected into the control circuit, the control components of the component node can also be connected to the outside via a single connector in a signal-transmitting and power-transmitting manner.

It is also conceivable that the component node contains at least one component for the at least one liquid guiding circuit, wherein the at least one component is not attached to the component carrier of the component node. The component node then contains at least one further control component connected into the control circuit for the at least one component. The component may be a fan, for example. In this embodiment, the control unit can also perform control/regulation of components that are not attached to the component carrier.

In a further development of the component node, it can be provided that the control unit and the at least one control component connected into the control circuit are connected to each other in a power-transmitting and/or signal-transmitting manner. The power-transmitting connection is primarily concerned with supplying the control components with current/voltage. The signal-transmitting connection is primarily concerned with transmitting signals between the control unit and the control component.

The control unit and the at least one control component connected into the control circuit can be connected to each other in a signal-transmitting manner via a cable. The cable can preferably be a LIN cable or a CAN cable. Alternatively, the control unit and the at least one control component connected into the control circuit can be connected to each other in a signal-transmitting manner wirelessly, preferably via a Bluetooth connection or a WLAN connection. To the outside, the control unit can be connected bidirectional via a cable, preferably via a LIN cable or a CAN cable, or wirelessly, preferably via a Bluetooth connection or a WLAN connection, in a signal-transmitting manner.

In an advantageous embodiment of the component node, the control unit can be detachably attached to the component carrier. It is conceivable, for example, that the control unit is clipped to the component node. In this way, the control unit can be detached from the component carrier in a simplified manner and can be replaced if necessary. The control unit can be detachably attached to the component carrier in such a way that the heat generated in the control unit can be transferred to the cooling liquid. For example, the control unit can be arranged to transfer heat to a wall that delimits the cooling liquid from the outside. The wall can be assigned to the component carrier itself or to the at least one functional component.

The control unit may contain a housing, and at least some elements of the at least one control component connected into the control circuit may be accommodated in the housing of the control unit. As a result, the component node may be more compact. Alternatively or additionally, the control unit may be arranged in a housing of the at least one functional component. The housing of the functional component then forms the housing of the control unit, in which at least some elements of the at least one control component connected into the control circuit may be arranged i.e. accommodated.

In summary, the functional components of the simplest design can be used in the component node. Thus, simple analog sensors and digital sensors, single-phase or multi-phase pumps and fans, actuators for multi-way valves or compressors without integrated power electronics can be used. In the component node, this eliminates the need for conventionally required LIN or CAN cables and integrated connectors, and the cost of the component node can be significantly reduced. In addition, the lack of power electronics in the component node reduces heat generated in the control circuit. As a result, the control circuit can be cooled more effectively and the service life of the control components can be extended. Furthermore, the weight and size of the component node can be significantly reduced.

Further important features and advantages of the invention are apparent from the subclaims, from the drawings, and from the accompanying figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, in each case schematically
- Fig. 1: an interconnection diagram of a component node according to the invention in a first embodiment;
- Fig. 2: a view of a control circuit of the component node according to the invention in the first embodiment;
- Fig. 3: an interconnection diagram of the component node according to the invention in a second embodiment;
- Fig. 4: an interconnection diagram of the component node according to the invention in a third embodiment;
- Fig. 5: a view of the control circuit of the component node according to the invention in the third embodiment.

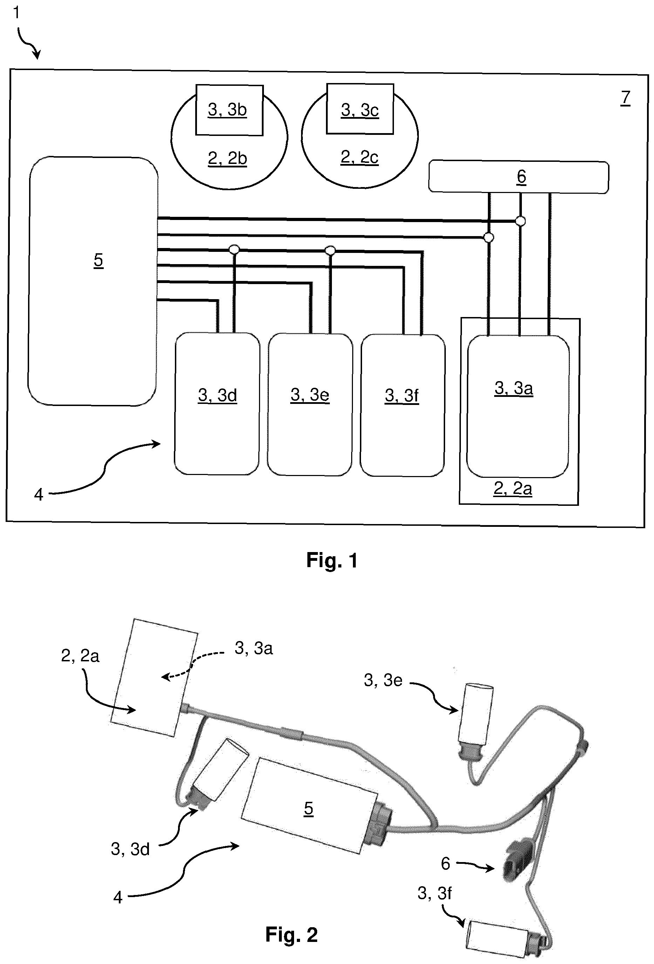

Fig. 1 shows an interconnection diagram of a component node 1 according to the invention in a first embodiment. The component node 1 contains a plurality of functional components 2 and a plurality of control components 3. The functional components 2 are here represented by a valve actuator 2a and by two pumps 2b and 2c. The functional components 2 are detachably attached to a component carrier 7. The control components 3 are here represented by a power electronics 3a of the valve actuator 2a, a power electronics 3b and 3c of the pumps 2b and 2c, a level sensor 3d and two temperature sensors 3e and 3f. The component node 1 also contains a control circuit 4 with a control unit 5.

Fig. 2 shows the control circuit 4 which control components 3 connected to the control circuit 4. Here and further, elements that are not visible from the outside are shown with broken arrows.

In the first embodyment, the power electronics 3a of the valve actuator 2a and the power electronics 3b and 3c of the pumps 2b and 2c are not connected into the control circuit 4 and cannot be controlled by the control unit 5. The power electronics 3a, 3b, 3c can each be connected to the on-board electronics via their own BUS system in a signal-transmitting and power-transmitting manner. The sensors 3d, 3e, 3f are connected into the control circuit 4. In the control unit 4 the sensors 3d, 3e, 3f are connected to the control unit 5 each via a BUS system in a signal-transmitting and power-transmitting manner. The control unit 5 can read in, process and provide the sensor signals of the sensors 3d, 3e, 3f. The control unit 5 is connected to the on-board electronics via a BUS system. The respective BUS system can be a LIN BUS system or a CAN BUS system.

The control unit 5 can be connected to the on-board electronics together with the power electronics 3a of the valve actuator 2a via a multi-pin connector 6. The BUS system of the sensor unit 5 and the BUS system of the valve actuator 2a are connected to the connector 6. The control unit 5 handles the communication of the sensors 3d, 3e, 3f with the on-board electronics. The wiring between the control components 3 is designed in such a way that auto-addressing of the control components 3 is possible. On the part of the on-board electronics, a total of three customer connectors are required in the first embodiment of the component node 1: two customer connectors for the power electronics 3b and 3c of the two pumps 2b and 2c and one customer connector for the connector 6.

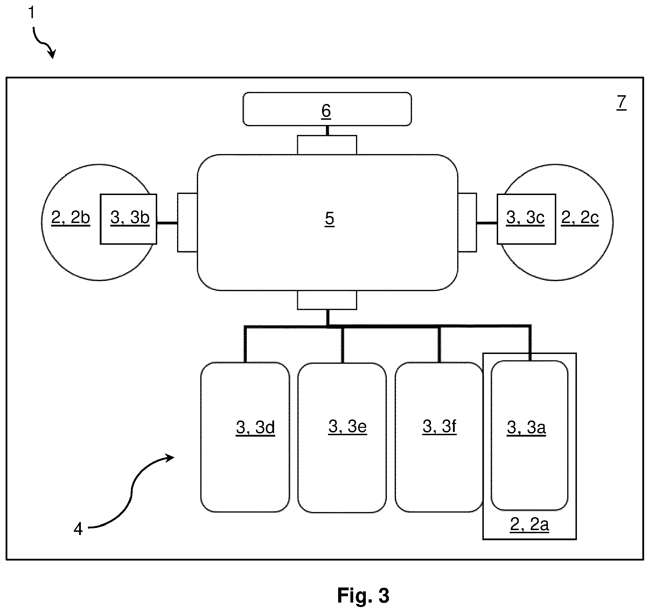

Fig. 3 shows an interconnection diagram of the component node 1 according to the invention in a second embodiment. In the second embodiment of the component node 1, all control components - I.e. the power electronics 3a, 3b, 3c and the sensors 3d, 3e, 3f - are connected into the control circuit 4 and can be controlled by the control unit 5. The control unit 5 is connected to the respective control component 3 via a BUS system in each case in a signal-transmitting and power-transmitting manner. The control unit 5 is also connected to the on-board electronics unit via the BUS system by means of the connector 6 in a signal-transmitting and data-transmitting manner. On the part of the on-board electronics, only one customer connector is required for the connector 6 in the second embodiment of the component node 1.

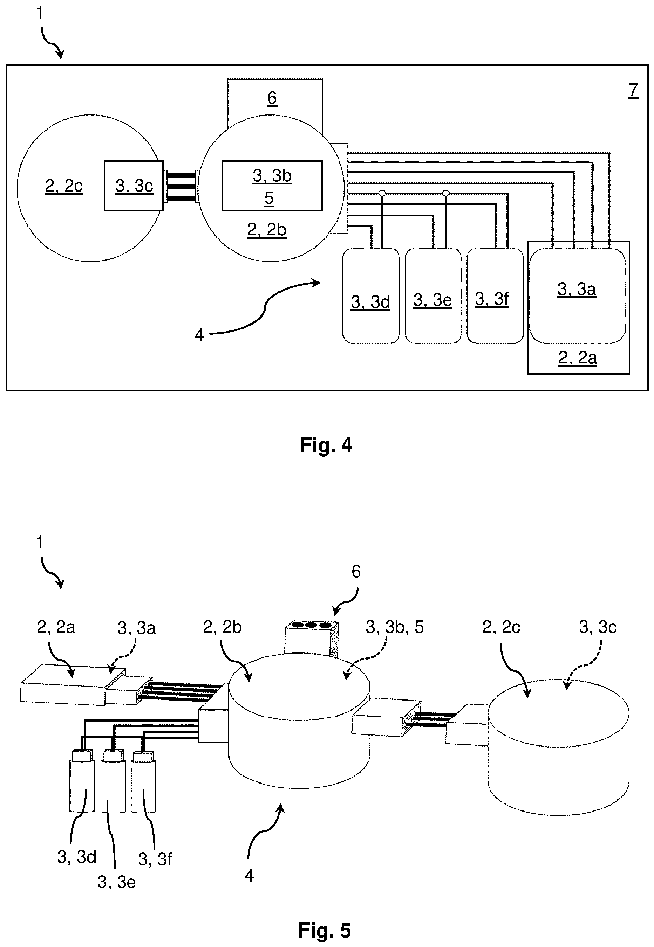

Fig. 4 shows an interconnection diagram of the component node 1 according to the invention in a third embodiment. Fig. 5 shows the control circuit 4 of the component node 1. The third embodiment of the component node 1 differs from the second embodiment in Fig. 3 in that the control unit 5 is arranged in a housing of the pump 2b. This allows the control circuit 4 to be designed in a particularly space-saving manner.

## Claims

1. Component node (1) for a vehicle with an electric drive motor and an electric energy storage system,
- wherein the component node (1) contains at least one functional component (2) through which cooling liquid can flow for at least one liquid guiding circuit of the vehicle and a component carrier (7), and
- wherein a component interface is formed on the component carrier (7) for the respective functional component (2), and the respective functional component (2) is detachably attached to the component carrier (7) via the component interface,
**characterized**
**in that** the component node (1) contains a control circuit (4) with at least one control unit (5) and at least one control component (3) connected into the control circuit (4) for the at least one functional component (2).

2. Component node according to claim 1,
**characterized**
- **in that** the at least one control component (3) is assigned to the at least one functional component (2) and the at least one functional component (2) can be controlled via the at least one control component (3), and/or
- **in that** the at least one control component (3) is assigned to the at least one functional component (2) and is designed for measuring of data at the at least one functional component (2).

3. Component node according to claim 1 or 2,
**characterized**
- **in that** the at least one functional component (2) is represented by a mechatronic component, in particular by an expansion valve or a pump or a motor or a compressor, and the at least one control component (3) is represented by power electronics (3a, 3b, 3c), in particular for controlling the expansion valve or the pump or the motor or the compressor, and/or
- **in that** the at least one control component (3) is represented by a sensor (3d, 3e, 3f), in particular by a temperature sensor for detecting temperature at the at least one functional component (2) or a filling level sensor for detecting filling level of the at least one functional component (2) or a pressure sensor for detecting pressure in the at least one functional component (2).

4. Component node according to any of the preceding claims,
**characterized**
- **in that** the component node (1) contains at least one component for the at least one liquid guiding circuit, and
- **in that** the control circuit (4) contains at least one further control component (3), connected into the control circuit (4), for the at least one component and
- **in that** the at least one component is not attached to the component carrier (7) of the component node (1).

5. Component node according to any of the preceding claims,
**characterized**
- **in that** the component node (1) contains at least one further control component (3), not connected into the control circuit (4), for the at least one functional component (2), or
- **in that** all control components (3) of the component node (1) are connected into the control circuit (4) of the component node (1), or
- **in that** the component node (1) contains at least one further control component (3), not connected into the control circuit (4), for the at least one functional component (2), wherein the control unit (5) and the at least one further control component (3) can be connected to the outside via a common connector (6) in a signal-transmitting and/or power-transmitting manner.

6. Component node according to any of the preceding claims,
**characterized**
- **in that** the control unit (5) and the at least one control component (3) connected into the control circuit (4) are connected to each other in a power-transmitting manner, and/or
- **in that** the control unit (5) and the at least one control component (3) connected into the control circuit (4) are connected to each other in a signal-transmitting manner.

7. Component node according to any of the preceding claims,
**characterized**
- **in that** the control unit (5) and the at least one control component (3) connected into the control circuit (4) are connected to one another in a signal-transmitting manner via a cable, preferably via a LIN cable or a CAN cable, or wirelessly, preferably via a Bluetooth connection or a WLAN connection, and/or
- **in that** the control unit (5) can be connected to the outside in a bidirectional and in a signal-transmitting manner via a cable, preferably via a LIN cable or a CAN cable, or wirelessly, preferably via a Bluetooth connection or a WLAN connection.

8. Component node according to any of the preceding claims,
**characterized**
- **in that** the control unit (5) is detachably fastened to the component carrier (1), preferably clipped to the component carrier (7), and/or
- **in that** the control unit (5) is detachably fastened to the component carrier (7) in such a way that the heat generated in the control unit (5) can be transferred to the cooling liquid, preferably via a wall delimiting the cooling liquid from the outside.

9. Component node according to any of the preceding claims,
**characterized**
- **in that** the control unit (5) contains a housing and at least some elements of the at least one control component (3) connected into the control circuit (4) are accommodated in the housing of the control unit (5), and/or
- **in that** the control unit (5) is arranged in a housing of the at least one functional component (3).

10. Component node according to any one of the preceding claims, **characterized**
- **in that** the at least one control component (5) connected into the control circuit (4) is formed by a sensor (3d, 3e, 3f) and the control unit (5) is designed for AD conversion and signal adaptation of sensor signals received by the at least one sensor (3d, 3e, 3f), and/or
- **in that** the at least one control component (3) connected into the control circuit (4) can be addressed automatically via a BUS system, and/or
- **in that** the component node (1) contains at least two control components (3) connected into the control circuit (4) and the at least two control components (3) connected into the control circuit (4) can be controlled interdependently via the control unit (5).
